# EUROPEAN PATENT SPECIFICATION

(11) **EP 2 851 443 B1**
(45) Date of publication and mention of the grant of the patent: **09.12.2015**
(21) Application number: 14153827.2
(22) Date of filing: 04.02.2014
(51) Int. Cl.: C22B 3/44, C22B 7/00

(54) **Method for comprehensive processing of a material composition from coal- and/or shale-extraction industry wastes to obtain a wide range of valuable chemical products**
Verfahren zur umfassenden Verarbeitung einer Materialzusammensetzung aus Kohle- und/oder Schieferextraktionsindustrieabfällen zur Gewinnung einer Reihe von wertvollen chemischen Stoffen
Procédé de traitement complet d'une composition de matériau à partir de déchets industriels de charbon et/ou de schiste pour obtenir une large gamme de produits chimiques de valeur

(30) Priority: 19.09.2013 EP 13185139
(43) Date of publication of application: 25.03.2015
(73) Proprietor: Popova, Natalia, 300026 Tula (RU); Platonov, Vladimir, 300026 Tula (RU); Vorobev, Nikolay, 300026 Tula (RU); Fridzon, Konstantin, 300026 Tula (RU)
(72) Inventor: Popova, Natalia, 300026 Tula (RU); Platonov, Vladimir, 300026 Tula (RU); Vorobev, Nikolay, 300026 Tula (RU); Fridzon, Konstantin, 300026 Tula (RU)
(74) Representative: Schaad, Balass, Menzl & Partner AG

(56) References cited:
- US-A- 3 840 637
- HUALING YANG ET AL: "Recovery of Trace Rare Earths from High-Level Fe 3+ and Al 3+ Waste of Oil Shale Ash (Fe-Al-OSA)", INDUSTRIAL & ENGINEERING CHEMISTRY RESEARCH, vol. 49, no. 22, 17 November 2010 (2010-11-17), pages 11645-11651, XP055135516, ISSN: 0888-5885, DOI: 10.1021/ie101115e
- LI C X ET AL: "Recovery of vanadium from black shale", TRANSACTIONS OF NONFERROUS METALS SOCIETY OF CHINA, NONFERROUS METALS SOCIETY OF CHINA, CN, vol. 20, 1 May 2010 (2010-05-01), pages s127-s131, XP027075855, ISSN: 1003-6326, DOI: 10.1016/S1003-6326(10)60026-X [retrieved on 2010-05-01]

## Description

The present invention relates to a method for comprehensive processing of a material composition from coal- and/or shale-extraction industry wastes to obtain a wide range of valuable chemical products.

As a fossil fuel, coal and/or oil shale represent viable energy alternatives for several countries. Oil shale, also known as kerogen shale, is an organic-rich fine-grained sedimentary rock containing kerogen (a solid mixture of organic chemical compounds) from which liquid hydrocarbons called shale oil can be produced. Shale oil is a substitute for conventional crude oil; however, extracting shale oil from oil shale is more costly than the production of conventional crude oil, both financially and in terms of its environmental impact. The problem is its high mineral content (60-88%), which means that it has a rather low calorific value and that vast quantities of solid wastes are generated during the extraction.

The waste problem also applies to the coal-extraction industry since coal mining produces vast amounts of small coal fragments and dust that are not usable in fossil fuel power stations.

There are both economic and ecological needs to convert the enormous quantities of coal- and/or shale extraction wastes into a resource. In particular, waste materials originating from coal- and/or shale-extraction industry are extremely complex in regard to their mineralogical and substance composition. Nevertheless, these materials have an enormous potential with regard to their content of minerals and rare earth metals.

The extraction of minerals generally involves either placer mining, which uses water and gravity to extract the valuable minerals, or hard rock mining, which uses pulverization of rock, followed by treatment with chemicals. In the latter, the extraction of minerals from ore requires that the ore be ground into fine particles, so tailings are typically small and range from the size of a grain of sand to a few micrometres.

Alumina-rich ores with low silica content are in limited supply, ores for the most part having a fairly low content of alumina.

The methods used nowadays for processing low-quality aluminum-containing ore can be divided into three main groups:
1. Hydrometallurgical (acid)
2. Sintering
3. Electrothermal

Electrothermal processing includes methods for the production of aluminum-silicon alloys and aluminum directly from the ores, bypassing the alumina production stage (subchloride, carbide, nitride).

HUALING YANG ET AL "Recovery of Trace Rare Earths from High-Level Fe 3+ and Al 3+ Waste of Oil Shale Ash (Fe-Al-OSA)" discloses a method for recovery metals from Oil shale ash (OSA), an inorganic waste obtained after the direct combustion of the oil shale which is a secondary resource associated with several valuable metals, such as high content of Al, Fe, and trace rare earths. The main steps disclosed in D1 are the following:
(1) acid leaching,
(2) separation of Fe3+ from leaching solution with tertiary amine N235,
(3) precipitation of Al3+ and trace rare earths with MgO and Na2CO3 and
(4) separation of rare earths by solvent extraction with TBP and recovery of Al3+.

However, all of these methods are characterized by large material streams and significant costs. In particular, large amounts of reagents (limestone, alkali, Na₂SO₄, K₂SO₄ KCl, etc.) are required for the selective separation of aluminum and silicon compounds, and these are often not recovered, this to a great extent particularly relating to sintering methods.

Additional problems arise from the use of solutions of hydrochloric and nitric acids since they require special process equipment made from high-alloy metals which are resistant to these acids, particularly to their dilute solutions and vapor. Safety requirements must be strictly adhered to, since serious illnesses, including cancers, occur when working with hydrochloric acid and particularly with nitric acid and its oxides and amines. Also, waste products formed in these plants require obligatory decontamination, and further use of them is extremely limited.

Furthermore, the processes known in the art are solely used for the production of aluminum compounds. Thus, none of the methods developed have complied with one of the fundamental principles of chemical technology - the rational utilization of the material potential of the raw material, in which modern physico-chemical methods of analysis have established the presence of up to 70 chemical elements, for some of which the aluminum-containing minerals are virtually the sole raw-material base.

Taking all the above into account, it is a problem of the present invention to provide a method for the rational processing of various aluminum-containing raw materials, which allows for a selective separation of aluminum and silicon compounds, and in particular permits for production of alumina, aluminum sulfate or potassium and chromium alums, coagulants, silica (SiO₂), rutile, iron pigment, concentrate of rare and rare-earth elements, and also individual elements of these groups.

This problem is solved by the method according to Claim 1. Preferred embodiments are subject of the dependent claims.

The method of the present invention allows for the isolation of aluminum, silicon and iron compounds from a raw material composition containing at least aluminium, silicon and iron.

The mineralogical and chemical composition of the raw material composition and its thermal stability can be obtained, for instance, by differential-thermal and differential-gravimetric, emission spectral, atomic-absorption, X-ray fluorescence and X-ray phase analyses and IR-Fourier spectroscopy.

In particular, the raw material composition is waste material from the coal- and/or shale-extraction industry. More particularly, the raw material composition comprises the organic and mineral parts of initial wastes of brown and hard coals and/or oil shales.

The method according to the present invention comprises the following steps:
a) grinding the raw material to produce material particles with a grain size of 50-100 micron;
b) leaching an organic part of the raw material using a base to afford a solid residue A;
c) drying and calcining the solid residue A to afford a calcined product B;
d) leaching oxides of aluminum and iron from the calcined product B by treatment with aqueous sulfuric acid having a concentration of 30-60 wt.%, wherein the weight ratio of product B: sulfuric acid is 1: 3.5 to 1: 4.5, to afford a sulfate solution C1 and a solid residue D1;
e) separating the sulfate solution C1 from the solid residue D1 and treating the sulfates solution C1 with a hydroxide salt to afford an insoluble metal hydroxide precipitate E and a remaining solution C2;
f) separating the metal hydroxide precipitate E from the remaining solution C2;
g) drying and calcining the metal hydroxide precipitate E at elevated temperature to afford an Fe₂O₃ containing product F;
h) treating the remaining solution C2 from step f) with sulfuric acid to afford an aluminum (III) sulfate containing solution G;
i) treating the aluminum (III) sulfate containing solution G with ammonia hydrate to afford an Al(OH)₃-precipitate H;
j) separating and calcining precipitate the Al(OH)₃-precipitate H at elevated temperature to afford Al₂O₃;
k) treating the separated solid residue D1 from step d) with a hydroxide solution to obtain an orthosilicate containing solution I and a remaining solid residue D2;
l) separating the orthosilicate containing solution I from the remaining solid residue D2 and treating the orthosilicate containing solution I with hydrochloric acid to afford a silicic acid precipitate J.

As evident from the various products obtained by the above steps, the method of the present invention allows for comprehensive processing of raw material compositions, in particular coal- and/or shale-extraction industry wastes, into final products comprising highly-concentrated alumina, silica, iron oxide (Fe₂O₃) and preferably also titanium oxide (TiO₂) pigments, concentrate of rare and rare-earth elements, potassium humates, sodium and ammonium sulfates, hydroxochloride and hydroxosulfate coagulants, and also source material for the production of high-quality cement.

As such, the method of the present invention takes into account the fundamental principle of chemical technology, namely the rational, full utilization of the material potential of an initial raw material composition.

In addition, the method of the present invention provides the possibility of expanding the range of valuable products based on the extracted minerals and metals: salts of aluminum and titanium, potassium and chromium alums, metallic aluminum, titanium and iron, hydroxochloride and hydroxosulfate coagulants, etc.; sorbents based on humic acids for heavy metals and radionuclides, organic and organic/mineral fertilizers.

A further advantage is that all the main steps of the method of the present invention are carried out using mainly sulfuric, nitric and hydrochloric acids and sodium and potassium hydroxides, which are in plentiful supply.

Also, all the main stages can be carried out at fairly low temperatures of 80-220 °C and at atmospheric pressure, which is extremely important in order to comply with process safety requirements and also for determining its energy demand and basic economic parameters.

At last, the reserves of coal- and/or shale-extraction industry wastes constitute more than 4 billion tons in the Russian Federation alone, while at the same time the reserves of the elements contained in the material have been significantly depleted. The method of the present invention makes it thus possible to resolve serious issues, such as the creation of jobs in coal-extracting regions, and thus to reduce social stress; to solve ecological problems, such as the return to agricultural use of lands covered by spoil heaps, etc.; and to preserve natural resources of particular scarce elements by producing them from coal- and/or shale-extraction industry waste.

As mentioned above, the first step a) according to the method of the present invention involves the grinding of the raw material to produce material particles with a grain size of 50-100 micron. This step ensures that large mechanical inclusions, such as metal, pyrite concretions, chalcopyrite, pyrrhotite, wood, etc. are removed directly from the raw material composition.

In the context of the present invention, the term "raw material" preferably relates to coal- and/or shale-extraction industry waste material.

The grinding step can be performed, for instance, by feeding the raw material to a store, which at the same time acts as an averaging chamber - mixing with a bucket elevator, and dry grinding the raw material in a ball mill.

The particle size is preferably monitored and regulated by means of a classifying screen.

The next step b) of the method according to the present invention involves the leaching of an organic part of the raw material using a base to afford a solid residue A. Preferably, the base is potassium hydroxide. More preferably, a 2-3 wt.% potassium hydroxide solution is used, in an amount such that the weight ratio of starting material: basic solution is about 1: 3. Step b) is further preferably performed at elevated temperatures of about 70-90 °C, typically during about 3-4 hours.

The organic parts of the raw material composition are thereby leached out into the basic solution, and the remaining solid residue A can be separated from the basic solution, e.g. by centrifugation and filtration or decanting. Preferably, the solid residue A is subsequently washed with water.

In the following step c) of the method according to the present invention, the solid residue A is dried and calcined to afford a calcined product B. The drying and calcining step can be performed in a furnace, preferably at a temperature of 450-650 °C for about 2-4 hours. The purpose of this drying and calcining step is the conversion of the kaolinite into amorphous metakaolinite, which readily reacts with acids even at atmospheric pressure.

Before the next step, the calcined product B is preferably cooled down to a temperature of about 20-30 °C.

Subsequently, in step d) of the method according to the present invention, the calcined product B is treated with aqueous sulfuric acid with the aim of leaching oxides of aluminum and iron to afford a sulfate solution C1 and a solid residue D1. The aqueous sulfuric acid has preferably a concentration of 30-60 wt.% and is preferably present in a weight ratio of product B: sulfuric acid of about 1: 4. Further preferred reaction conditions in step d) include a reaction temperature of about 70-90 °C; and a reaction time of about 2-4 hours.

Without wanting to be bound by the theory, it is assumed that in step d), at least some of the following main reactions occur:

CaO + H₂SO₄ → CaSO₄ + H₂O

MgO + H₂SO₄ → MgSO₄ + H₂O

Al₂O₃ + 3 H₂SO₄ → Al₂(SO₄)₃ + 3 H₂O

Fe₂O₃ + 3 H₂SO₄ → Fe₂(SO₄)₃ + 3 H₂O

Other components contained in the calcined product B, such as Mn₂O₃; TiO₂; SiO₂ and other oxides, virtually do not react with the aqueous sulfuric acid solution and are therefore not leached out into the sulfates solution C1.

It has been found that the removal of the organic parts from the starting material before step c) and following steps of the method according to the present invention avoids the formation of a "dirty foam" by sulfuric acid causing active oxidation of the organic part. If such a "dirty foam" is formed, it contaminates the solution of the metal sulfates, e.g. the Al, Ca, Mg and Fe sulfates, and is extremely difficult or virtually impossible to remove. Thus, removal of the organic parts from the raw material composition in step b) enables that aluminum oxide of the purity required for the electrochemical production of metallic aluminum can be obtained.

In addition, the drying and calcining of solid residue A in step c) after leaching out the organic parts ensures occurrence of the following reactions: burning out any remaining parts of organic substance, dehydration of the crystal hydrates, conversion of the polymorphic form of kaolinite into metakaolinite - which is more reactive in relation to sulfuric acid - and decomposition of carbonates, sulfates and phosphates.

In step e) of the method according to the present invention, the sulfate solution C1 is separated from the solid residue D1 and treated with a hydroxide salt. The separation of the sulfate solution C1 from the solid residue D1 can be achieved, for instance, by means of centrifuging and/or filtration, e.g. by using a nut filter.

The treatment of the thus separated sulfate solution C1 with a hydroxide salt leads to precipitation of a metal hydroxide precipitate E from a remaining solution C2. Preferably, the hydroxide salt is sodium hydroxide, more preferably in the form of an aqueous sodium hydroxide solution with a concentration of 20-40 wt.%. In general, a volume ratio of sulfates solution C1: hydroxide solution of 1: 4 is preferred. The reaction may be conducted at room temperature, e.g. at about 20-30 °C.

Upon treatment of the sulfate solution C1 with sodium hydroxide salt, at least some of the following reactions are thought to occur:

CaSO₄ + 2 NaOH → Ca(OH)_{2↓} + Na₂SO₄

MgSO₄ + 2 NaOH → Mg(OH)_{2↓} + Na₂SO₄

Fe₂(SO₄)₃ + NaOH → 2 Fe(OH)_{3↓} + 3 Na₂SO₄

Al₂(SO₄)₃ + 8 NaOH → 2 Na [Al (OH) ₄]_{(aq)} + 3 Na₂SO₄

Thus, the formed precipitate E comprises the metal hydroxides of iron, and, if calcium and magnesium are present in the raw material composition, metal hydroxides of calcium and magnesium will precipitate as well. As regards the reaction of aluminum sulfate with the hydroxide salt, aluminum trihydroxide is first formed as an intermediate since the hydroxide salt is typically used in excess in relation to the aluminum sulfate. Taking into account the amphoteric nature of the aluminum trihydroxide, resulting reaction product will be sodium tetrahydroxymetaaluminate Na[Al(OH)₄], which will remain solubilized in the remaining solution C2.

The next step, step f) of the method according to the present invention, is the separation of the remaining solution C2 from the precipitated insoluble metal hydroxide precipitate E, for instance by centrifugation. Preferably, the separated metal hydroxide precipitate E is subsequently washed with distilled water.

Following separation and optionally washing of the metal hydroxide precipitate E, the latter is dried and calcined at elevated temperature in step g) of the method according to the present invention to afford Fe₂O₃ containing product F. The calcination temperatures are preferably in the range of about 800-1200 °C. Due to the presence of Fe₂O₃, the product F is dark red in color and is also known as "red sludge".

During the drying and calcination step g), at least some of the following reactions are assumed to take place:

Ca(OH)₂ → CaO + H₂O_{↑}

Mg(OH)₂ → MgO + H₂O_{↑}

2 Fe(OH)₃ → Fe₂O₃ + 3 H₂O_{↑}

The proportion by weight of Fe₂O₃ in the product F is generally in the range of 60-70%, which allows for using it in a blast furnace process (fluxed agglomerate) and also in steel production:

Fe₂O₃ + Fe → 3 FeO - deoxidation stage

5 FeO + 2 P → P₂O₅ + 5 Fe

P₂O₅ + 3 FeO → Fe₃(PO₄)₂

Fe₃(PO₄)₂ + CaO·MgO → {CaO·P₂O₅·MgO} + 3 FeO

FeO + C → Fe + CO_{↑}

Thus, product F can be utilized in the production of high-quality cement, of "iron pigment" - pure Fe₂O₃ - and also of {CaO·P₂O₅·MgO}, which is also known as "basic slag", a phosphorus-containing mineral fertilizer.

In step h) of the method according to the present invention, the remaining solution C2 from step f) is treated with sulfuric acid to afford an aluminum (III) sulfate containing solution G. In particular, the solubilized Na[Al(OH)₄] in the remaining solution C2 is converted into aluminum (III) sulfate by the sulfuric acid treatment:

2 Na[Al(OH)₄] + 4 H₂SO₄ → Al₂(SO₄)₃ + Na₂SO₄ + 2 H₂O

Preferably, a 20-40 wt.% solution of sulfuric acid is used in this step. It is further preferred that the volume ratio of Na[Al(OH)₄] solution : sulfuric acid solution is about 1: 4. This reaction may also be conducted at room temperature, preferably at about 20-40 °C, for about 0.5-1.5 hours.

The subsequent step i) of the method according to the present invention involves the treatment of the aluminum (III) sulfate containing solution G with ammonia hydrate (NH₃·H₂O) to afford an Al(OH)₃-precipitate H. The reaction that is assumed to take place in step i) is the following:

Al₂O(SO₄)₃ + 6 (NH₃·H₂O) → 2 Al(OH)_{3↓} + 3 (NH₄)₂SO₄

For the above reaction, the use of a 10-25 wt.% ammonia hydrate solution is preferred, in particular in a volume ratio of solution G: ammonia hydrate solution of about 1: 8. The reaction is preferably performed at a temperature of about 20-25 °C for about 1-2 hours. In order to facilitate the precipitation, a small amount of pure (98-99%) aluminum (III) oxide may be added as seed.

In step j), the Al(OH)₃-precipitate H is then separated from the remaining solution and calcined at elevated temperature to afford Al₂O₃. The separation of the Al(OH)₃-precipitate H from the remaining solution is preferably achieved by filtration, preferably followed by washing the filtrate with distilled water. Preferred conditions for the calcination step are temperatures in the range of about 800-1200 °C and a time frame of about 2-4 hours. During calcination, the following reaction takes place:

2 Al(OH)₃ → Al₂O₃ + 3 H₂O_{↑}

The degree of leaching of Al₂O₃ has usually been in the range of 87-92%, and the content by weight in the range of 97.5-98.5%, which is appropriate for its use in the electrochemical production of metallic aluminum.

The solution of ammonium sulfate is preferably evaporated to afford the dry salt for further use in glass and ceramic production, medicine and other industries. Alternatively, it is preferably mixed with a solution of potassium humate to obtain a highly effective organic/mineral fertilizer.

With the object of expanding the range of products, the aluminum trihydroxide may be passed to production of potassium and chromium alums (tanning agents for skins), hydroxochloride and hydroxosulfate coagulants (effective agents for purifying domestic and industrial wastewaters by removing a wide range of heavy metals, radionuclides and organic compounds), and various salts of aluminum, such as cryolite, which greatly improves the economic parameters of the method of the present invention as a whole.

In the next step, step k) according to the method of the present invention, the solid residue D1 which has been separated in step d) is treated with a hydroxide solution to obtain a silicate containing solution I and a remaining solid residue D2. This means that SiO₂ is leached out from the solid residue D1 into the hydroxide solution to afford an orthosilicate containing solution I.

The hydroxide solution used preferably contains sodium hydroxide and has preferably a concentration of 20-40 wt.%. When using sodium hydroxide, the following reaction occurs:

SiO₂ + 2 NaOH → Na₂SiO₃ + H₂O

Preferably, the weight ratio of solid residue D: the hydroxide solution is about 1: 3, and the reaction is preferably performed at a reaction temperature of about 70-95 °C during about 1-4 hours.

In step 1) of the method according to the present invention, the orthosilicate containing solution I is separated from the remaining solid residue D2, preferably by centrifuging the mixture followed by filtration, and is subsequently treated with hydrochloric acid to afford a silicic acid precipitate J ({SiO_{2↓} ·nH₂O}) and a sodium chloride solution (if sodium hydroxide was used). If NaOH has been used in step k), the reaction in step 1) will be as follows:

Na₂SiO₃ + 2 HCl → 2 NaCl + {SiO_{2↓} ·nH₂O}

The concentration of the hydrochloric acid solution in step 1) is preferably 15-30 wt.%, and the ratio of the HCl-solution: the orthosilicate containing solution I is preferably about 1: 3 by weight. The reaction may be conducted at room temperature, i.e. at about 20-30 °C.

The silicic acid precipitate J formed has usually a gel-like structure. For further use, said silicic acid gel may be separated from a remaining reaction solution K, e.g. by filtration, and subsequently calcined at elevated temperatures, preferably at about 1000-1200 °C for about 2-4 hours in order to obtain silicon (IV) oxide.

If the separated remaining reaction solution K is evaporated, a dry salt containing about 95% of the hydroxide used in step k) can be recovered for further use.

This is another example of how the method of the present invention allows for making use of almost all products and materials used or obtained in steps a) to 1) according to claim 1 of the present application.

To this end, as mentioned above, the product F from step g) can be utilized in the production of high-quality cement and/or of phosphorus-containing mineral fertilizers.

Alternatively, the product F may also be treated with 30-50 wt.% nitric acid solution in a preferred additional step m) of the method of the present invention, preferably in a weight ratio of about 1: 3 and preferably at about 80-90 °C for about 2-4 hours. This affords a nitrate solution L containing the nitrates of iron and other metals that may have been contained in the product F, e.g. calcium, magnesium, nickel, cobalt, manganese, vanadium and/or titanium.

In a preferred embodiment, the method further comprises an extraction n), in which the nitrate solution L is extracted
n1) with a solution of butyric acid in chloroform, preferably in a weight ratio of about 1: 3,
n2) with a saturated solution of thiourea,
n3) with ethylenediaminetetraacetic acid (EDTA or EDTA-H4, also known as "Trilon-B"), and
n4) with tributylphosphate in kerosene, preferably in a weight ratio of about 1: 3. By this additional extraction step n), a concentrate M comprising at least one rare-earth metal, e.g. lanthanum, cerium, dysprosium, and/or neodymium, is obtained.

In a preferred embodiment, the method comprises an additional step o), in which adsorption fractionation of the nitrates solution L, preferably on KU-2-8; KU-2-8(H⁺); KU-2-8(Cu²⁺), is performed to afford brown coal humic acids in the H⁺ and Cu²⁺ form and one or more product(s) from the following group: lanthanum, cerium, dysprosium, neodymium, and also a concentrate of iron, nickel, manganese, cobalt, vanadium and titanium. The used adsorption fractionation is a partitioning process based on the adsorption of humic acid to mineral particles. "KU-2-8" stands for "Cation Exchange Resin KU-2-8", which is a copolymer of styrene and divinylbenzene.

In a preferred embodiment, the method comprises an additional step p), in which the remaining solid residue D2 separated in the earlier step 1) is treated with sulfuric acid at elevated temperatures to afford a titanyl sulfate solution N. The reaction is preferably performed using a 80-90 wt.% sulfuric acid solution at a temperature of about 200-240 °C for about 2-4 hours. Preferably, this reaction is performed in a reactor with a jacket, through which silicone oil is circulated, and with a gate stirrer of e.g. 60 rev/min. The ratio of solid residue D2: H₂SO₄ solution is preferably about 1: 1.5 by weight. Upon this sulfuric acid treatment, the following reaction occurs:

TiO₂ + H₂SO₄ → TiOSO₄ + H₂O

The titanyl sulfate solution N is subsequently preferably filtered and treated with a hydroxide solution at room temperature to obtain a titanic acid precipitate O. Generally, a 20-40 wt.% solution of sodium hydroxide is used in a weight ratio of about 1: 1.5 (solution N: hydroxide solution), and the reaction is preferably performed at about 20-40 °C for about 1-2 hours until dihydroxy(oxo)titanium (titanic acid) is precipitated out:

TiOSO₄ + 2 NaOH → TiO(OH)_{2↓} + Na₂SO₄

The titanic acid precipitate O is subsequently separated, preferably washed with distilled water and then dried and calcined at elevated temperatures, preferably at about 800-1000 °C for about 2-4 hours, to afford titanium (IV) oxide.

TiO(OH)₂ → TiO₂ + H₂O_{↑}

The degree of leaching of titanium (IV) oxide has been found to be generally in the range of 90-93%, and its content in the range of 97-98.5% by weight.

Alternatively, the remaining solid residue D2 separated in the earlier step 1) may be washed and dried so it can be used as a starting material for the production of high-quality cement and industrial ceramics.

### Methods

### Composition analysis of the coal- and/or shale-extraction industry wastes used as raw material

The mineralogical and chemical composition of the raw material composition and its thermal stability was obtained by differential-thermal and differential-gravimetric, emission spectral, atomic-absorption, X-ray fluorescence and X-ray phase analyses and IR-Fourier spectroscopy.

According to the results of differential-thermal and differential-gravimetric analyses, the raw material contains 0-3.57 moisture (W) (wt.% on the starting material), and 15.0 organic substances and 85.0 minerals (wt.%, respectively, on the air-dry material). Removal of moisture occurs in the temperature range of 100-240 °C, thermolysis of organic substance at 240-550 °C, and breakdown of crystal hydrates at 630-750 °C with subsequent densification of the structure of minerals, such as the conversion of amorphous SiO₂ into quartzite, and of β- and γ-Al₂O₃ into Al₂O₃, etc., which is confirmed by the results of X-ray phase analysis.

Emission spectral, atomic-absorption and X-ray fluorescence analyses identified the following in the mineral part of the raw material (wt.%): Al (13.34), Si (14.37), Fe (2.49), Mg (0.72), Ca (1.14), Ti (0.53), Mn (0.39), Ni (0.08), Cu (0.06), Pb (0.01), V (0.05), Co (0.08), Sr (0.13), Cr (0.03), Zn (0.04); Ga (0.03*10⁻²), Ge (0.04*10⁻²); Sn (0.4*10⁻³), Sc (0.75*10⁻³), Zr (8.75*10⁻³), Ba (0.70*10⁻³); As (3.10*10⁻⁴), Mo (4.60*10⁻⁴), W (6.50*10⁻⁴), Bi (1.15*10⁻⁴), Th (0.02*10⁻⁴), Ce (0.06*10⁻⁴), Sb (2.50*10⁻⁴), Cd (0.30*10⁻⁴), La (0.65*10⁻⁴); Au (0.15*10⁻⁵), Ag (1.35*10⁻⁵), Hg (0.40*10⁻⁵), Pd (0.30*10⁻⁵), Ru (0.01*10⁻⁵), Rh (0.01*10⁻⁵), Y (0.35*10⁻⁵), Pt (0.07*10⁻⁵); Nb (2.82*10⁻⁶), Dy (1.23*10⁻⁶), Nd (1.69*10⁻⁶), Rb (3.35*10⁻⁶), Cs (0.93*10⁻⁶), Li (0.94*10⁻⁶).

These results show that coal- and/or shale-extraction industry waste contains a wide range of elements, the quantitative content of which varies from 14.37 (Si) to 0.93.10⁻⁶ (Cs) wt.%. The basis of the mineral part of the raw material comprises Si, Al, Mg, Ca, Ti, Mn, Fe, Cr, Ni, V, Co, Mo, Cu, Zr and Zn.

The composition of the mineral part of the raw material composition, calculated as oxides, comprises (wt.%): SiO₂ (60.7), Al₂O₃ (26.7), MgO (0.89), CaO (1.86), Fe₂O₃ (5.26), TiO₂ (1.10) and Mn₂O₃ (0.018).

X-ray phase analysis established the presence of the following in the composition of the raw material: β- and γ-Al₂O₃; CaCO₃; MgCO₃; FeCO₃, aluminosilicates of Al₂Si₄O₁₀(OH)₂ type; silicates of varying modification, and a substantial amount of amorphous SiO₂.

The results of X-ray phase and X-ray fluorescence analysis were confirmed by IR Fourier spectroscopy, which made it possible to identify: quartz, opal, amorphous SiO₂, α-, β- and γ-Al₂O₃, kaolinite, montmorillonite, glauconite, muscovite, biotite, calcite, siderite, pyrite, α-FeO(OH), and humic substances.

### Example

For comprehensive processing of a material composition from coal- and/or shale-extraction industry wastes, the following preferred sequence of operations was performed:
1. Large mechanical inclusions - metal, pyrite concretions, chalcopyrite, pyrrhotite, wood, etc. are removed directly from the raw material.
2. The raw material is fed to a store, which at the same time acts as an averaging chamber - mixing with a bucket elevator.
3. Dry grinding of the raw material is performed in a ball mill.
4. A classifying screen is used to produce a 70-90 micron fraction of the raw material.
5. The organic part of the raw material is leached by using 2-3 wt.% potassium hydroxide solution; raw material: solution ratio 1: 3 (by wt.); 70-90°C, 3-4 hours to afford solid residue A.
6. The alkaline solution of potassium salts of humic acids is centrifuged. Washing the solid residue A with water.
7. Solid residue A is dried and calcined in a furnace with a removable roof at a temperature of 450-650°C for 2-4 hours with the object of converting the kaolinite into amorphous metakaolinite with high reactivity in relation to sulfuric acid → affords calcined product B.
8. Cooling the calcined product B to 20-30°C.
9. Leaching oxides of aluminum (III), calcium, magnesium and iron (III) from calcined product B by using 30-50% sulfuric acid solution in a reactor with gate stirrer and steam jacket. Using a ratio of calcined product B: sulfuric acid solution - 1: 3 (by wt.); temperature 70-90°C; time 2-4 hours. → affords sulfate solution C¹ and solid residue D1
10. Centrifuging of the sulfates solution C1 and solid residue D1.
11. Treating the sulfates solution C1 with 20-40 wt.% sodium hydroxide solution. The sulfates solution C1: sodium hydroxide solution ratio is 1 : 4 (by wt.). → affords metal hydroxide precipitate E and a remaining solution C2
12. Centrifuging the insoluble metal hydroxide precipitate E (hydroxides of Ca, Mg and Fe(III)), washing these with distilled water, drying, and calcining in a furnace at 800-1000°C. → affords product F
   The resultant product F is known as "red sludge" - it is dark red in color due to Fe₂O₃.
   The proportion by weight of Fe₂O₃ in the solid calcined product (sinter) is 65.8 (wt.%), so that it can be recommended for use in the blast furnace process (fluxed agglomerate),and also in steel production.
13. Conversion of Na[Al(OH)₄] into aluminum (III) sulfate by treating the solution C² with a 20-40 wt.% solution of sulfuric acid. The ratio of solution C²: sulfuric acid solution is 1 : 2 (by wt.). → affords an aluminum (III) sulfate containing solution G
14. Separation of the aluminum (III) sulfate containing solution G from the precipitate which has formed.
15. Treatment of the aluminum (III) sulfate containing solution G with 15-25 wt.% ammonia hydrate solution; Ratio of solutions 1: 8 (by wt.).
16. Leaving the resultant mixture to stand with addition of pure (98-99%) aluminum (III) oxide as seed. → affords an Al(OH)₃-precipitate H
17. Filtration to separate the Al(OH)₃-precipitate H, washing this with distilled water, drying, and calcining at 1000-1200°C for 2-3 hours. → affords Al₂O₃
   The degree of leaching of Al₂O₃ is 87-92%, and the content by weight is 97.5-98.5%, which is appropriate for its use in the electrochemical production of metallic aluminum.
18. The solution of ammonium sulfate is evaporated to give the dry salt, or is mixed with the solution of potassium humate as an organic/mineral fertilizer.
19. Solid residue D1, produced in step 9. of leaching out aluminum, calcium, magnesium and iron (III), is treated with 20-50 wt.% sodium hydroxide solution. Ratio of solid residue D¹: sodium hydroxide solution 1: 3 (by wt.), 80-95°C, 2-4 hours. Silica is leached out. → affords an orthosilicate containing solution I
20. Separation of the orthosilicate containing solution I from the solid residue D2 by centrifuging, filtration.
21. Treatment of the orthosilicate containing solution I with 15-30 wt.% hydrochloric acid solution; ratio of solutions 1 : 3 (by wt.), 20°C. → affords an silicic acid precipitate J and sodium chloride solution
22. Separation of silicic acid precipitate J from the sodium chloride solution, drying, calcining at 1000-1200°C for 2-4 hours. Degree of leaching of silicon (IV) oxide is 85-93%, content by wt. of SiO₂ - 98.5-99.2%.
23. The sodium chloride solution is evaporated to dryness and the dry salt, containing 94-96 wt% of the basic substance, can be used as a food product and for other purposes.
24. The solutions of sodium sulfate obtained when producing alumina (Al₂O₃) are evaporated to dryness to give the free salt Na₂SO₄, for use in glass and ceramic production, medicine and other industries.
25. "Red sludge" product F is treated with 30-50 wt.% nitric acid solution. Ratio of product F: nitric acid solution 1 : 3 (by wt.), 80-90°C, 2-4 hours. → affords a nitrates solution L containing the nitrates of Ca, Mg, Fe, Ni, Co, Mn, V and Ti.
26. Separation of the nitrates solution L from remaining solid residue.
27. Extraction of the nitrates solution L using the system:
   1. butyric acid : chloroform (1: 3 by wt.);
   2. saturated solution of thiourea;
   3. Trilon-B;
   4. tributylphosphate: kerosene (1: 3 by wt.)
      → A concentrate M of rare-earth metals: lanthanum, cerium, dysprosium, neodymium (La, Ce, Dy, Nd), etc. is obtained.
28. Adsorption fractionation of the nitrates solution on KU-2-8 (KU-2-8 (H⁺); KU-2-8 (Cu²⁺)) is performed to afford brown coal humic acids in the H⁺ and Cu²⁺ form and one or more product(s) selected from the group consisting of lanthanum, cerium, dysprosium, neodymium, and also a concentrate of iron, nickel, manganese, cobalt, vanadium and titanium.
29. The solid residue D2 after leaching out silicon (IV) oxide - (step 20) is treated with 80-90 wt.% sulfuric acid solution at a temperature of 200-240°C for 2-4 hours in a reactor with a jacket through which silicone oil is circulated and with a gate stirrer (60 rev/min). The ratio of solid residue D2: H₂SO₄ solution is 1 : 1.5 (by wt.). → affords a titanyl sulfate solution N
30. The titanyl sulfate solution N is filtered off and treated with a 20-40 wt.% solution of sodium hydroxide at 20-40°C for 1-2 hours. Ratio of solutions 1 : 1.5 (by wt.). → affords a titanium titanic acid precipitate O
31. Separation of the titanic acid precipitate O, washing this with distilled water, drying, calcining at 800-1000°C for 2-4 hours.
   The degree of leaching of titanium (IV) oxide is 90-93%, and its content is 97-98.5% by weight.
32. The solution of sodium sulfate is evaporated to dryness.

## Claims

1. Method for the isolation of aluminum, silicon and iron compounds from a raw material composition comprising at least aluminium, silicon and iron, comprising the steps of:
a) grinding the raw material to produce raw material particles with a grain size of 50-100 micron;
b) leaching an organic part of the raw material using a base to afford a solid residue A;
c) drying and calcining the solid residue A to afford a calcined product B;
d) leaching oxides of aluminum and iron from the calcined product B by treatment with aqueous sulfuric acid having a concentration of 30-60 wt.%, wherein the weight ratio of product B to sulfuric acid is from 1:3.5 to 1:4.5, to afford a sulfate solution C1 and a solid residue D1;
e) separating the sulfate solution C1 from the solid residue D1 and treating the sulfate solution C1 with a hydroxide salt to obtain an insoluble metal hydroxide precipitate E and a remaining solution C2;
f) separating the metal hydroxide precipitate E from the remaining solution C2;
g) drying and calcining the metal hydroxide precipitate E at elevated temperature to afford a product F containing Fe₂O₃;
h) treating the remaining solution C2 from step f) with sulfuric acid to afford an aluminum (III) sulfate containing solution G;
i) treating the aluminum (III) sulfate containing solution G with ammonia hydrate to afford an Al(OH)₃-precipitate H;
j) separating and calcining precipitate H at elevated temperature to afford Al₂O₃;
k) treating the separated solid residue D1 from step d) with a hydroxide solution to obtain an orthosilicate containing solution I and a remaining solid residue D2;
l) separating the orthosilicate containing solution I from the remaining solid residue D2 and treating the orthosilicate containing solution I with hydrochloric acid to afford a silicic acid precipitate J.

2. Method according to claim 1, wherein step c) further encompasses the leaching of oxides of calcium and magnesium.

3. Method according to claim 1 or 2, comprising a further step m), in which the product F from step g) is treated with 30-50 wt.% nitric acid solution to afford a nitrates solution L containing the nitrates of iron and other metals that may have been contained in the product F.

4. Method according to claim 3, further comprising an extraction n), in which the nitrates solution L is extracted
n1) with a solution of butyric acid in chloroform,
n2) with a saturated solution of thiourea,
n3) with ethylenediaminetetraacetic acid, and
n4) with tributylphosphate in kerosene,
to afford a concentrate M comprising at least one rare-earth metal.

5. Method according to one of claims 3 or 4, comprising a further step o), in which adsorption fractionation of the nitrates solution L, preferably on KU-2-8; KU-2-8 (H⁺); KU-2-8 (Cu²⁺), is performed to afford brown coal humic acids in the H⁺ and Cu²⁺ form, and one or more product(s) selected from the group consisting of lanthanum, cerium, dysprosium, neodymium, and also a concentrate of iron, nickel, manganese, cobalt, vanadium and titanium.

6. Method according to one of claims 1 to 5, comprising a further step p), in which the remaining solid residue D2 separated in step 1) is treated with sulfuric acid at elevated temperatures to afford a titanyl sulfate solution N.

7. Method according to claim 6, comprising a further step q), in which the titanyl sulfate solution N is treated with a hydroxide solution at room temperature to obtain a titanic acid precipitate O, the titanic acid precipitate being subsequently separated, dried and calcined at elevated temperature to afford titanium (IV) oxide.

8. Method according to one of claims 1 to 7, comprising the steps of
S1 removal of large mechanical inclusions from the raw material;
S2) feeding the raw material to a store and mixing with a bucket elevator;
S3) dry grinding of raw material in a ball mill;
S4) producing a 70-90 micron fraction of the raw material using a classifying screen;
S5) leaching the organic part of the raw material using a 2-3 wt.% potassium hydroxide solution in a ratio of raw material: solution of 1: 3 (by wt.) at a temperature of 70-90 °C for 3-4 hours to afford tje solid residue A;
S6) centrifuging the alkaline solution of potassium salts and washing the solid residue A with water;
S7) drying the solid residue A and calcining it in a furnace with a removable roof at a temperature of 450-650 °C for 2-4 hours to afford calcined product B;
S8) cooling the calcined product B to 20-30 °C;
S9) leaching oxides of aluminum (III), calcium, magnesium and iron (III) from the calcined product B by using 30-50% sulfuric acid solution in a reactor with gate stirrer and steam jacket, using a ratio of calcined product B: sulfuric acid solution of 1: 3 (by wt.) at a temperature 70-90 °C for time 2-4 hours to afford the sulfate solution C1 and the solid residue D1;
S10) centrifuging the sulfate solution C1 and the solid residue D1;
S11) treating the sulfate solution C1 with 20-40 wt.% sodium hydroxide solution in a ratio of the sulfates solution C1 to the sodium hydroxide solution of 1: 4 (by wt.) to afford the metal hydroxide precipitate E and the remaining solution C2;
S12) centrifuging the insoluble metal hydroxide precipitate E to afford hydroxides of Ca, Mg and Fe(III), washing these with distilled water, drying, and calcining in a furnace at 800-1000 °C to afford product F;
S13) conversion of Na[Al(OH)₄] into aluminum (III) sulfate by treating the solution C2 with a 20-40 wt.% solution of sulfuric acid, the ratio of solution C2 to the sulfuric acid solution being 1: 2 (by wt.), to afford the aluminum (III) sulfate containing solution G;
S14) separation of the aluminum (III) sulfate containing solution G from a precipitate which may have formed;
S15) treatment of the aluminum (III) sulfate containing solution G with 15-25 wt.% ammonia hydrate solution in a ratio of the solutions of 1: 8 (by wt.);
S16) leaving the resultant mixture to stand, preferably with addition of pure (98-99%) aluminum (III) oxide as seed, to afford the Al(OH)₃-precipitate H;
S17) filtration to separate the Al(OH)₃-precipitate H, washing this with distilled water, drying, and calcining at 1000-1200 °C for 2-3 hours to afford Al₂O₃;
S18) evaporating the solution of ammonium sulfate to give a dry salt, or mixing the solution of ammonium sulfate with a solution of potassium humate to afford an organic/mineral fertilizer;
S19) treating the solid residue D1 with 20-50 wt.% sodium hydroxide solution in a ratio of solid residue D1 to sodium hydroxide solution of 1: 3 (by wt.) at a temperature of 80-95 °C for 2-4 hours to afford the orthosilicate containing solution I and the solid residue D2;
S20) separation of the orthosilicate containing solution I from the solid residue D2 by centrifuging and filtration;
S21) treatment of the orthosilicate containing solution I with a 15-30 wt.% hydrochloric acid solution, the ratio of the solutions being, 1: 3 (by wt.), at a temperature of 20 °C to afford the silicic acid precipitate J and a sodium chloride solution; S22) separation of the silicic acid precipitate J from the sodium chloride solution, drying, calcining at 1000-1200 °C for 2-4 hours;
S23) evaporating the sodium chloride solution dryness and optionally using a remaining dry salt as a food product;
S24) evaporating the solutions of sodium sulfate obtained when producing alumina (Al₂O₃) to dryness to give the free salt Na₂SO₄;
S25) treating product F with a 30-50 wt.% nitric acid solution in a ratio of product F to nitric acid solution of 1: 3 (by wt.) at a temperature of 80-90 °C for 2-4 hours to afford the nitrates solution L containing;
S26) separation of the nitrate solution L from a remaining solid residue, if present;
S27) extraction of the nitrate solution L using the system (n1) butyric acid: chloroform (1: 3 by wt.), (n2) a saturated solution of thiourea, (n3) Trilon-B, and (n4) tributylphosphate: kerosene (1: 3 by wt.) to afford a concentrate M of rare-earth metals;
S28) optionally performing adsorption fractionation of the nitrate solution on KU-2-8; KU-2-8(H⁺); KU-2-8(Cu²⁺), to afford brown coal humic acids in the H⁺ and Cu²⁺ form and at least one of lanthanum, cerium, dysprosium, neodymium, and also a concentrate of iron, nickel, manganese, cobalt, vanadium and/or titanium;
S29) treating the solid residue D2, after leaching out silicon (IV) oxide, with a 80-90 wt.% sulfuric acid solution at a temperature of 200-240 °C for 2-4 hours in a reactor with a jacket, through which silicone oil is circulated, and with a gate stirrer (60 rev/min), the ratio of solid residue D2 to H₂SO₄ solution being 1: 1.5 (by wt.), to afford the titanyl sulfate solution N;
S30) filtering the titanyl sulfate solution N and treating it with a 20-40 wt.% solution of sodium hydroxide at 20-40 °C for 1-2 hours in ratio of the solutions of 1: 1.5 (by wt.), to afford the titanic acid precipitate O;
S31) separation of the titanic acid precipitate O, washing this with distilled water, drying, and calcining at 800-1000 °C for 2-4 hours; and S32) evaporating the solution of sodium sulfate to dryness.

## Patentansprüche

1. Verfahren zur Trennung Aluminium-, Silicium- und Eisenverbindungen von einer Rohmaterialzusammensetzung, die mindestens Aluminium, Silicium und Eisen enthält, umfassend die Schritte:
a) Zerkleinern des Rohmaterials zur Herstellung Rohmaterialteilchen mit einer Teilchengrösse von 50-100 µm;
b) Auslaugen eines organischen Teils des Rohmaterials mit einer Base, um einen festen Reststoff A zu erhalten;
c) Trocknen und Kalzinieren des festen Reststoffs A, um ein kalziniertes Produkt B zu erhalten;
d) Auslaugen der Aluminium- und Eisenoxide aus dem kalzinierten Produkt B durch Behandlung mittels wässriger Schwefelsäure mit einer Konzentration von 30-60 Gew.-%, wobei das Gewichtsverhältnis des Produkts B zur Schwefelsäure 1:3.5 bis 1:4.5 ist, um eine Sulfatlösung C1 und einen festen Reststoff D1 zu erhalten;
e) Separieren der Sulfatlösung C1 vom festen Reststoff D1 und Behandeln der Sulfatlösung C1 mit einem Hydroxidsalz, um ein unlösliches Metallhydroxid-Präzipitat E und eine Restlösung C2 zu erhalten;
f) Separieren des Metallhydroxid-Präzipitats E von der Restlösung C2;
g) Trocknen und Kalzinieren des Metallhydroxid-Präzipitats E bei erhöhter Temperatur, um ein Fe₂O₃-enthaltendes Produkt F zu erhalten;
h) Behandeln der Restlösung C2 aus Schritt f) mit Schwefelsäure, um eine Aluminium(III)-sulfat enthaltende Lösung G zu erhalten;
i) Behandeln der Aluminium(III)-sulfat enthaltenden Lösung G mit Ammoniak-Hydrat, um ein Al(OH)₃-Präzipitat H zu erhalten;
j) Separieren und Kalzinieren des Präzipitats H bei erhöhter Temperatur, um Al₂O₃ zu erhalten;
k) Behandeln des separierten festen Reststoffs D1 aus Schritt d) mit einer Hydroxidlösung, um eine Orthosilikat-enthaltende Lösung I und einen übrigen festen Reststoff D2 zu erhalten;
l) Separation der Orthosilikat-enthaltenden Lösung I vom übrigen festen Reststoff D2 und Behandeln der Orthosilikat-enthaltenden Lösung I mit Salzsäure, um ein Kieselsäurepräzipitat J zu erhalten.

2. Verfahren nach Anspruch 1, wobei der Schritt c) ferner die Auslaugung der Calcium- und Magnesiumoxide umfasst.

3. Verfahren nach Anspruch 1 oder 2, umfassend einen weiteren Schritt m), in welchem das Produkt F aus Schritt g) mit einer Salpetersäurelösung von 30-50 Gew.-% behandelt wird, zum Erhalt einer Nitratlösung L, welche Eisennitrat und die Nitrate von anderen gegebenenfalls im Produkt F enthaltenen Metallen enthält.

4. Verfahren nach Anspruch 3, umfassend zusätzlich einen Extraktions-Schritt n), in welchem die Nitratlösung L
n1) mit einer Buttersäurelösung in Chloroform,
n2) mit einer gesättigten Thioharnstofflösung,
n3) mit Ethylendiamin-tetraessigsäure, und
n4) mit Tributylphosphat in Kerosin
extrahiert wird, um ein mindestens ein Seltenerdmetall enthaltendes Konzentrat M zu erhalten.

5. Verfahren nach einem der Ansprüche 3 oder 4, umfassend einen zusätzlichen Schritt o), in welchem eine Fraktionierung basierend auf der Adsorption der Nitratlösung L, vorzugsweise auf KU-2-8; KU-2-8(H⁺); KU-2-8(Cu²⁺), durchgeführt wird, um Braunkohle-Huminsäuren in der H⁺- und Cu²⁺-Form sowie ein oder mehrere Produkte ausgewählt aus der Gruppe bestehend aus Lanthan, Cer, Dysprosium, Neodym, und ferner ein Eisen-, Nickel-, Mangan-, Kobalt-, Vanadium- und Titankonzentrat, zu erhalten.

6. Verfahren nach einem der Ansprüche 1 bis 5, umfassend einen zusätzlichen Schritt p), in welchem der im Schritt 1) separierte übrige feste Reststoff D2 bei erhöhter Temperatur mit Schwefelsäure behandelt wird, um eine Titanylsulfat-Lösung N zu erhalten.

7. Verfahren nach Anspruch 6, umfassend einen zusätzlichen Schritt q), in welchem die Titanylsulfat-Lösung N mit einer Hydroxidlösung bei Raumtemperatur behandelt wird, um ein Titansäurepräzipitat 0 zu erhalten, wobei das Titansäurepräzipitat 0 anschliessend separiert, getrocknet und bei erhöhter Temperatur kalziniert wird, um Titan(IV)-oxid zu erhalten.

8. Verfahren nach einem der Ansprüche 1 bis 7, umfassend die Schritte
- S1 Entfernen grosser mechanischer Einschlüsse aus dem Rohmaterial;
- S2) Einspeisen des Rohmaterials in ein Lager und Mischung mithilfe eines Becherwerks;
- S3) trockene Zerkleinerung des Rohmaterials in einer Kugelmühle;
- S4) Herstellen einer Fraktion von 70-90 Mikron des Rohmaterials mittels eines klassierenden Siebs;
- S5) Auslaugen des organischen Teils des Rohmaterials mit einer Kaliumhydroxid-Lösung von 2-3 Gew.-% in einem Gewichtsverhältnis von Rohmaterial : Lösung von 1 : 3 bei einer Temperatur von 70-90°C während 3-4 Stunden, um den festen Reststoff A zu erhalten;
- S6) Zentrifugieren der alkalischen Kaliumsalzlösung und Waschen des festen Reststoffs A mit Wasser;
- S7) Trocknen und Kalzinieren des festen Reststoffs A in einem Ofen mit einem abnehmbaren Dach bei einer Temperatur von 450-650°C während 2-4 Stunden, um das kalzinierte Produkt B zu erhalten;
- S8) Abkühlen des kalzinierten Produkts B auf 20-30°C;
- S9) Auslaugen der Aluminium(III)-, Kalzium-, Magnesium- und Eisen(III)-oxide aus kalzinierten Produkt B mit einer Schwefelsäurelösung von 30-50% in einem Dampfmantelreaktor umfassend einen Gitterrührer, unter Verwendung eines Gewichtverhältnisses von kalziniertem Produkt B : Schwefelsäurelösung von 1 : 3 bei einer Temperatur von 70-90°C während 2-4 Stunden, um die Sulfatlösung C1 und den festen Reststoff D1 zu erhalten;
- S10) Zentrifugieren der Sulfatlösung C1 und des festen Reststoffs D1;
- S11) Behandeln der Sulfatlösung C1 mit einer Kaliumhydroxid-Lösung von 20-40 Gew.-% in einem Gewichtverhältnis von Sulfatlösung C1 zu Kaliumhydroxid-Lösung von 1 : 4, um das Metallhydroxid-Präzipitat E und die Restlösung C2 zu erhalten;
- S12) Zentrifugieren des Metallhydroxid-Präzipitats E, um Hydroxide von Ca, Mg und Fe(III) zu erhalten, Waschen der erhaltenen Hydroxide mit destilliertem Wasser und anschliessendes Trocknen und Kalzinieren in einem Ofen bei 800-1000°C, um das Produkt F zu erhalten;
- S13) Umwandeln des Na[Al(OH)₄] in Aluminium(III)-sulfat durch Behandlung der Lösung C2 mit einer Schwefelsäurelösung von 20-40 Gew.-% in einem Gewichtsverhältnis von Lösung C2 zu Schwefelsäurelösung von 1 : 2, um die Aluminium(III)-sulfat enthaltende Lösung G zu erhalten;
- S14) Separieren der Aluminium(III)-sulfat enthaltenden Lösung G von einem gegebenenfalls gebildeten Präzipitat;
- S15) Behandeln der Aluminium(III)-sulfat enthaltenden Lösung G mit einer Ammoniak-Hydrat-Lösung von 15-25 Gew.-%, wobei das Gewichtsverhältnis der Lösungen 1 : 8 beträgt;
- S16) Stehenlassen der resultierenden Mischung, vorzugsweise unter Beigabe von reinem Aluminium(III)-oxid (98-99%) als Ausfällungskeim, um das Al(OH)₃-Präzipitat H zu erhalten;
- S17) Separieren des Al(OH)₃-Präzipitats H durch Filtration und Waschen des Filtrats mit destilliertem Wasser sowie anschliessendes Trocknen und Kalzinieren bei 1000-1200°C während 2-3 Stunden, um Al₂O₃ zu erhalten;
- S18) Verdampfen der Ammoniumsulfat-Lösung, um ein trockenes Salz zu erhalten, oder Mischen der Ammoniumsulfat-Lösung mit einer Humat-Kalium-Lösung, um einen organischen/mineralischen Dünger zu erhalten;
- S19) Behandeln des festen Reststoffs D1 mit einer Natriumhydroxid-Lösung von 20-50 Gew.-% in einem Gewichtsverhältnis von festem Reststoffs D1 zu Natriumhydroxid-Lösung von 1 : 3 bei einer Temperatur von 80-95°C während 2-4 Stunden, um die Orthosilikatenthaltende Lösung I und den festen Reststoff D2 zu erhalten;
- S20) Separieren der Orthosilikat-enthaltenden Lösung I vom festen Reststoff D2 mittels Zentrifugation und Filtration;
- S21) Behandeln der Orthosilikat-enthaltenden Lösung I mit einer Salzsäurelösung von 15-30 Gew.-%, wobei das Gewichtsverhältnis der Lösungen 1 : 3 beträgt, bei einer Temperatur von 20°C, um das Kieselsäurepräzipitat J und eine Natriumchlorid-Lösung zu erhalten;
- S22) Separation des Kieselsäurepräzipitats J von der Natriumchlorid-Lösung sowie anschliessendes Trocknen und Kalzinieren bei 1000-1200°C während 2-4 Stunden;
- S23) Verdampfen der Natriumchlorid-Lösung bis zur Trockenheit und wahlweise Verwendung des übrigen trockenen Salzes als Lebensmittelerzeugnis;
- S24) Verdampfen der bei der Aluminiumoxid (Al₂O₃)-Herstellung erhaltenen Natriumsulfatlösungen bis zur Trockenheit, um freies Na₂SO₄-Salz zu erhalten;
- S25) Behandeln des Produkts F mit einer Salpetersäurelösung von 30-50 % in einem Gewichtsverhältnis von Produkt F zu Salpetersäurelösung von 1 : 3, bei einer Temperatur von 80-90°C während 2-4 Stunden, um die Nitratlösung L zu erhalten;
- S26) Separation der Nitratlösung L vom übrigen gegebenenfalls vorhandenen Reststoff;
- S27) Extraktion der Nitratlösung L unter Verwendung des Systems
(n1) Buttersäure : Chloroform (Gew.-Verh. 1 : 3),
(n2) eine gesättigte Thioharnstofflösung,
(n3) Trilon-B, und
(n4) Tributylphosphat : Kerosin (Gew.-Verh. 1 : 3), um ein Konzentrat M von Seltenerdmetallen zu erhalten;
- S28) wahlweise Durchführung einer Absorptions-Fraktionierung der Nitratlösung auf KU-2-8; KU-2-8(H⁺); KU-2-8(Cu²⁺), um Braunkohle-Huminsäuren in Form von H⁺ und Cu²⁺, und mindestens ein Element, ausgewählt aus der Gruppe aus Lanthan, Cer, Dysprosium, Neodym, und ferner ein Eisen-, Nickel-, Mangan, Kobalt-, Vanadium- und/oder Titankonzentrat, zu erhalten;
- S29) Behandeln des festen Reststoffs D2 nach dem Waschen des Silicium(IV)-oxids mit einer Schwefelsäurelösung von 80-90 Gew.-% bei einer Temperatur von 200-240°C während 2-4 Stunden in einem Mantel-Reaktor, durch welchen Silikonöl geführt wird und einen Gitterrührer (60 U/min) umfasst, wobei das Gewichtsverhältnis von festem Reststoff D2 zu H₂SO₄-Lösung 1 : 1.5 beträgt, um die Titanylsulfatlösung N zu erhalten;
- S30) Filtrierung der Titanylsulfatlösung N und anschliessende Behandlung mit einer Natriumhydroxidlösung von 20-40 Gew.-% bei 20-40°C während 1-2 Stunden, wobei das Gewichtsverhältnis der Lösungen 1 : 1.5 beträgt, um das Titansäurepräzipitat O zu erhalten;
- S31) Separation des Titansäurepräzipitats 0 und anschliessendes Waschen mit destilliertem Wasser, danach Trocknen und Kalzinieren bei 800-1000°C während 2-4 Stunden; und
- S32) Verdampfen der Natriumsulfatlösung bis zur Trockenheit.

## Revendications

1. Méthode pour l'isolement de composés d'aluminium, de silicium et de fer d'une composition de matière première comprenant au moins de l'aluminium, du silicium et du fer, comprenant les étapes:
a) broyage de la matière première pour produire des particules de matière première avec une taille de grains de 50-100 micron;
b) lessivage d'une partie organique de la matière première avec une base pour obtenir un résidu solide A;
c) séchage et calcination du résidu solide A pour obtenir un produit calciné B;
d) lessivage des oxydes d'aluminium et de fer du produit calciné B par traitement avec de l'acide sulfurique aqueux ayant une concentration de 30-60% en poids, le rapport de poids du produit B à l'acide sulfurique étant de 1:3.5 à 1:4.5, pour obtenir une solution de sulfate C1 et un résidu solide D1;
e) séparation de la solution de sulfate C1 du résidu solide D1 et traitement de la solution de sulfate C1 avec un sel d'hydroxyde pour obtenir un précipité insoluble d'hydroxyde métallique E et une solution C2 restante;
f) séparation du précipité d'hydroxyde métallique E de la solution C2 restante;
g) séchage et calcination du précipité d'hydroxyde métallique E à une température élevée pour obtenir un produit F contenant du Fe₂O₃;
h) traitement de la solution C2 restante de l'étape f) avec de l'acide sulfurique pour obtenir une solution G contenant du sulfate d'aluminium(III) ;
i) traitement de la solution G contenant du sulfate d'aluminium(III) avec de l'hydrate d'ammoniac pour obtenir un précipité H de Al(OH)₃;
j) séparation et calcination du précipité H à température élevée pour obtenir du Al₂O₃;
k) traitement du résidu solide D1 séparé à l'étape d) avec une solution hydroxyde pour obtenir une solution I contenant un orthosilicate et un résidu solide D2 restant;
l) séparation de la solution I contenant de l'orthosilicate du résidu solide D2 restant et traitement de la solution I contenant de l'orthosilicate avec de l'acide chlorhydrique pour obtenir un précipité d'acide silicique J.

2. Méthode selon la revendication 1, l'étape c) comprenant en outre un lessivage des oxydes de calcium et de magnésium.

3. Méthode selon la revendication 1 ou 2, comprenant une étape m) supplémentaire, dans laquelle le produit F de l'étape g) est traité avec une solution d'acide nitrique à 30-50% en poids pour obtenir une solution de nitrates L contenant les nitrates de fer et d'autres métaux qui peuvent avoir été contenus dans le produit F.

4. Méthode selon la revendication 3, comprenant en outre une extraction n), dans laquelle la solution de nitrates L est extraite
n1) avec une solution d'acide butyrique dans du chloroforme,
n2) avec une solution saturée de thiourée,
n3) avec un acide éthylènediaminetétracétique, et
n4) avec du tributylphosphate dans du kérosène,
pour obtenir un concentré M comprenant au moins un métal de terres rares.

5. Méthode selon une des revendications 3 ou 4, comprenant une étape o) supplémentaire, dans laquelle un fractionnement de la solution de nitrates L par adsorption, préférablement sur KU-2-8; KU-2-8(H⁺); KU-2-8(Cu²⁺), est réalisé pour obtenir des acides humiques de lignite sous la forme de H⁺ et Cu²⁺, et un ou plusieurs produit(s) sélectionnés dans le groupe consistant en lanthane, cérium, dysprosium, néodyme, et aussi un concentré de fer, nickel, manganèse, cobalt, vanadium et titane.

6. Méthode selon une des revendications 1 à 5, comprenant une étape p) supplémentaire, dans laquelle le résidu solide D2 restant séparé à l'étape 1) est traité avec de l'acide sulfurique à des températures élevées pour obtenir une solution de sulfate de titanyle N.

7. Méthode selon la revendication 6, comprenant une étape q) supplémentaire, dans laquelle la solution de sulfate de titanyle N est traitée avec une solution hydroxyde à température ambiante pour obtenir un précipité d'acide titanique 0, le précipité d'acide titanique étant séparé par la suite, séché et calciné à une température élevée pour obtenir de l'oxyde de titane (IV).

8. Méthode selon une des revendications 1 à 7, comprenant les étapes
- S1) enlèvement des grosses inclusions mécaniques de la matière première;
- S2) alimentation en matière première un dépôt et mélange avec un élévateur à godets;
- S3) broyage à sec de la matière première dans un broyeur à boulets;
- S4) production d'une fraction de 70-90 micron de la matière première en utilisant un tamis calibreur;
- S5) lessivage de la partie organique de la matière première avec une solution d'hydroxyde de potassium à 2-3% en poids dans un rapport matière première : solution de 1 : 3 (en poids) à une température de 70-90°C pendant 3-4 heures pour obtenir le résidu solide A;
- S6) centrifugation de la solution alcaline de sels de potassium et nettoyage du résidu solide A avec de l'eau;
- S7) séchage du résidu solide A et calcination de celui-ci dans un four avec un toit amovible à une température de 450-650°C pendant 2-4 heures pour obtenir le produit calciné B;
- S8) refroidissement du produit calciné B à 20-30°C;
- S9) lessivage des oxydes d'aluminium(III), de calcium, de magnésium et de fer(III) du produit calciné B avec une solution d'acide sulfurique à 30-50% dans un réacteur avec un agitateur à grille et une enveloppe de réchauffage à vapeur, avec un rapport produit calciné B : solution d'acide sulfurique de 1 : 3 (en poids) à une température de 70-90°C pendant un temps de 2-4 heures pour obtenir la solution de sulfate C1 et le résidu solide D1;
- S10) centrifugation de la solution de sulfate C1 et du résidu solide D1;
- S11) traitement de la solution de sulfate C1 avec une solution d'hydroxyde de sodium à 20-40% en poids dans un rapport de la solution de sulfate C1 à la solution d'hydroxyde de sodium de 1 : 4 (en poids) pour obtenir le précipité d'hydroxyde de métal E et la solution C2 restante;
- S12) centrifugation du précipité d'hydroxyde de métal E pour obtenir des hydroxydes de Ca, Mg et Fe(III), nettoyage de ceux-ci avec de l'eau distillée, séchage, et calcination dans un four à 800-1000°C pour obtenir le produit F;
- S13) conversion du Na[Al(OH)₄] en sulfate d'aluminium(III) par traitement de la solution C2 avec une solution d'acide sulfurique à 20-40 % en poids, le rapport de la solution C2 à la solution d'acide sulfurique étant 1 : 2 (en poids), pour obtenir la solution G contenant du sulfate d'aluminium(III) ;
- S14) séparation de la solution G contenant du sulfate d'aluminium(III) d'un précipité qui peut avoir été formé;
- S15) traitement de la solution G contenant du sulfate d'aluminium(III) avec une solution d'hydrate d'ammoniac à 15-25% en poids dans un rapport des solutions de 1 : 8 (en poids);
- S16) laisser le mélange résultant à reposer, préférablement avec l'addition d'oxyde d'aluminium(III) pur (98-99%) comme germe, pour obtenir le précipité H de Al(OH)₃;
- S17) filtration pour séparer le précipité H de Al(OH)₃, nettoyage de celui-ci avec de l'eau distillée, séchage, et calcination à 1000-1200°C pendant 2-3 heures pour obtenir du Al₂O₃;
- S18) évaporation de la solution de sulfate d'ammonium pour donner un sel sec, ou mélange de la solution de sulfate d'ammonium avec une solution d'humate de potassium pour obtenir un engrais organique/minéral;
- S19) traitement du résidu solide D1 avec une solution d'hydroxyde de sodium à 20-50% en poids dans un rapport du résidu solide D1 à la solution d'hydroxyde de sodium de 1 : 3 (en poids) à une température de 80-95°C pendant 2-4 heures pour obtenir la solution I contenant de l'orthosilicate et le résidu solide D2;
- S20) séparation de la solution I contenant de l'orthosilicate du résidu solide D2 par centrifugation et filtration;
- S21) traitement de la solution I contenant de l'orthosilicate avec une solution d'acide chlorhydrique à 15-30% en poids, le rapport des solutions étant 1 : 3 (en poids), à une température de 20°C pour obtenir le précipité d'acide silicique J et une solution de chlorure de sodium;
- S22) séparation du précipité d'acide silicique J de la solution de chlorure de sodium, séchage et calcination à 1000-1200°C pendant 2-4 heures;
- S23) évaporation de la solution de chlorure de sodium jusqu'à dessèchement et optionnellement utiliser le sel sec restant comme un produit alimentaire;
- S24) évaporation des solutions de sulfate de sodium obtenues lors de la production d'alumine (Al₂O₃) jusqu'à dessèchement pour donner le sel libre Na₂SO₄;
- S25) traitement du produit F avec une solution d'acide nitrique à 30-50% dans un rapport du produit F à la solution d'acide nitrique de 1 : 3 (en poids) à une température de 80-90°C pendant 2-4 heures pour obtenir la solution de nitrates L;
- S26) séparation de la solution de nitrates L du résidu solide restant, si présent;
- S27) extraction de la solution de nitrates L en utilisant le système
(n1) acide butyrique : chloroforme (1 : 3 en poids),
(n2) une solution saturée de thiourée,
(n3) Trilon-B, et
(n4) tributylphosphate : kérosène (1 : 3 en poids), pour obtenir un concentré M de métaux de terres rares;
- S28) optionnellement réalisation d'un fractionnement de la solution de nitrates par adsorption sur KU-2-8; KU-2-8 (H⁺) ; KU-2-8 (Cu²⁺), pour obtenir des acides humiques de lignite sous la forme H⁺ et Cu²⁺ et au moins un produit sélectionné dans le groupe consistant en lanthane, cérium, dysprosium, néodyme, et aussi un concentré de fer, de nickel, de manganèse, de cobalt, de vanadium et/ou de titane;
- S29) traitement du résidu solide D2, après lessivage de l'oxyde de silicium(IV) avec une solution d'acide sulfurique à 80-90% en poids à une température de 200-240°C pendant 2-4 heures dans un réacteur avec une enveloppe, à travers laquelle de l'huile de silicone est conduite, et avec un agitateur à grille (60 tr/min), le rapport du résidu solide D2 à la solution de H₂SO₄ étant 1 : 1.5 (en poids), pour obtenir la solution de sulfate de titanyle N;
- S30) filtration de la solution de sulfate de titanyle N et traitement de celle-ci avec une solution d'hydroxyde de sodium à 20-40% en poids à 20-40°C pendant 1-2 heures dans un rapport des solutions de 1 : 1.5 (en poids), pour obtenir le précipité d'acide titanique 0;
- S31) séparation du précipité d'acide titanique 0, nettoyage de celui-ci avec de l'eau distillée, séchage et calcination à 800-1000°C pendant 2-4 heures; et
- S32) évaporation de la solution de sulfate de sodium jusqu'à dessèchement.
